# EUROPÄISCHE PATENTSCHRIFT

(11) **EP 1 012 127 B1**
(45) Veröffentlichungstag und Bekanntmachung des Hinweises auf die Patenterteilung: **12.02.2003**
(21) Anmeldenummer: 98943884.1
(22) Anmeldetag: 07.08.1998
(51) Int. Cl.: C04B 38/00, B28B 7/34, B28B 7/18, B01F 5/06, B01D 39/20

(54) **VON FLUIDEN DURCHSTRÖMBARER, PORÖSER KÖRPER MIT DIESEN DURCHZIEHENDEN KANÄLEN UND VERFAHREN ZUM HERSTELLEN DES KÖRPERS**
PERVIOUS CHANNEL-CROSSED POROUS BODY
CORPS POREUX PERMEABLE AUX FLUIDES ET TRAVERSE PAR DES CANAUX

(30) Priorität: 22.08.1997 DE 19736638; 30.08.1997 DE 19738021; 15.11.1997 DE 19750733
(43) Veröffentlichungstag der Anmeldung: 28.06.2000
(73) Patentinhaber: Deutsches Zentrum für Luft- und Raumfahrt e.V., 53175 Bonn (DE)
(72) Erfinder: HOFFSCHMIDT, Bernhard, D-51469 Bergisch Gladbach (DE)
(74) Vertreter: Hilleringmann, Jochen, Dipl.-Ing.
(86) Internationale Anmeldenummer: EP9805024
(87) Internationale Veröffentlichungsnummer: WO99010295

(56) Entgegenhaltungen:
- EP-A- 0 185 514
- EP-A- 0 275 393
- CH-A- 680 788
- DE-C- 3 600 048
- GB-A- 2 128 539
- US-A- 3 112 184
- US-A- 3 651 180
- US-A- 4 251 239
- CHEMICAL ABSTRACTS, vol. 102, no. 16, 22. April 1985 Columbus, Ohio, US; abstract no. 136608m, DAIDO STEEL CO. : Seite 291; XP002088216 & JP 59 209846 A (ID.)
- CHEMICAL ABSTRACTS, vol. 113, no. 26, 24. Dezember 1990 Columbus, Ohio, US; abstract no. 236512w, M. SATO, ET AL.: Seite 309; XP000184685 & JP 02 081462 A (ID.)
- CHEMICAL ABSTRACTS, vol. 110, no. 12, 20. März 1989 Columbus, Ohio, US; abstract no. 100559x, Y. OZAKI, ET AL.: Seite 338; XP000019175 & JP 63 225587 A (ID.)
- DATABASE WPI Week 8825 Derwent Publications Ltd., London, GB; AN 88-173562 XP002088217 & SU 1 354 016 A (MOSC POWER)

## Beschreibung

Die Erfindung betrifft einen von Fluid (Gas und/oder Flüssigkeit) durchströmbaren, porösen Körper aus temperaturbeständigem Material mit diesen durchziehenden Kanälen und Verfahren zum Herstellen des Körpers.

Derartige Körper werden beispielsweise als chemische Mischer eingesetzt. Die gebräuchlichen chemischen Mischer bestehen aus gewellten Stahlblechen oder keramischen Geweben. Diese Stahlbleche bzw. keramischen Gewebe werden aneinanderliegend zu Einheiten zusammengefasst, wobei sich zwischen den Stahlblechen bzw. Geweben sich kreuzende Kanäle bilden. Die Stahlbleche sind mitunter gelocht, so dass ein diesen chemischen Mischerkörper durchziehender Fluidstrom vergleichmäßigt und damit das Fluid vermischt wird. Herstellungstechnisch können die einzelnen Mischerkörper über eine gewisse Maximallänge hinaus nicht hergestellt werden. Daher werden zur Erzeugung längerer Mischer mehrere derartige Mischerkörper hintereinandergeschaltet. Dies verteuert den Herstellungsprozess.

Aus US-A-4 251 239, EP-A-0 185 514, CH-A-680 788 und Chemical Abstracts, vol. 102, no. 16, 22. April 1985 Columbus, Ohio, US; abstract no. 136608m, DAIDO STEEL Co.: Seite 291; XP002088216 & JP 59 209846 A sind jeweils keramische Schaumkörper mit diesen durchziehenden zueinander parallelen Kanälen bekannt.

Der Erfindung liegt die Aufgabe zugrunde, einen von einem Fluid durchströmbaren, porösen Körper mit diesen durchziehenden Kanälen zu schaffen, bei dem die Vergleichmäßigung und Vermischung des Fluids verbessert ist und vereinfachte Herstellungsverfahren für den Körper vorzuschlagen, und zwar im wesentlichen unabhängig von der Länge des porösen Körpers.

Zur Lösung dieser Aufgabe werden mit der Erfindung ein poröser Körper nach Anspruch 1 und ein Verfahren zur Herstellung des porösen Körpers nach Anspruch 11 vorgeschlagen. Die Unteransprüche betreffen einzelne Ausgestaltungen der Erfindung.

Der erfindungsgemäße poröse Körper aus temperaturbeständigem Material weist eine Eintrittsfläche und eine Austrittsfläche auf. Das durch den porösen Körper strömende Fluid tritt an der Eintrittsfläche in den porösen Körper ein und an der Austrittsfläche aus dem porösen Körper aus, so dass die Durchströmungsrichtung von der Eintrittsfläche in Richtung der Austrittsfläche gerichtet ist. Erfindungsgemäß sind in dem porösen Körper erste Kanäle angeordnet, die in einem spitzen Winkel zur Durchströmungsrichtung verlaufen. Unter spitzem Winkel wird im folgenden ein Winkel ungleich 0° verstanden. Aufgrund der Porosität des Körpers sind die den Körper durchziehenden Kanäle miteinander verbunden, so dass ein Vermischen des durch den porösen Körper strömenden Fluids stattfindet. Da die Kanäle mit der Durchströmungsrichtung einen spitzen Winkel einschließen, strömt ein Teil des Fluids durch die Kanäle und ein Teil des Fluids in der Durchströmungsrichtung durch die porösen Bereiche, d.h. die zwischen den Kanälen vorgesehenen porösen Wände direkt in Durchströmungsrichtung. Dadurch wird das Fluid (oder mehrere Fluide) vermischt und vergleichmäßigt, so dass an der Austrittsfläche des porösen Körpers ein homogenisiertes Fluid austritt.

Der erfindungsgemäße poröse Körper weist zusätzlich zu den ersten Kanälen zweite Kanäle auf, die ebenfalls in einem spitzen Winkel zur Durchströmungsrichtung angeordnet sind und zusätzlich in einem Winkel, d.h. einem Winkel ungleich 0°. zu den ersten Kanälen angeordnet sind. Durch sich derart kreuzende Kanäle, die sich zumindest teilweise durchdringen, wird die Vergleichmäßigung und Vermischung der Fluide verbessert. Eine weitere Verbesserung kann dadurch erreicht werden, dass der Winkel der Kanäle zur Durchströmungsrichtung entlang der Erstreckung der Kanäle variiert. Bei einem zylindrischen porösen Körper mit gleichbleibender Durchströmungsrichtung über die Länge des Körpers von der Eintritts- bis zur Austrittsfläche sind die Kanäle beispielsweise wellen- oder zickzackförmig. Dadurch wird erreicht, dass ein zur Homogenisierung des Fluids ausreichender Anteil des den Körper durchströmenden Fluids durch die porösen Bereiche strömt.

Da der poröse Körper temperaturbeständig ist, eignet er sich auch zum Mischen heißer Fluide. Hierbei treten aufgrund der erfindungsgemäßen Struktur des Körpers keine lokalen Überhitzungen auf, durch die der poröse Körper beschädigt oder zerstört würde.

Ferner ist der erfindungsgemäße poröse Körper zum Filtern von Fluiden geeignet. Hierbei setzen sich die Partikel an den Porenwänden ab. Aufgrund der Temperaturbeständigkeit des Körpers, der beispielsweise aus Keramik, insbesondere aus hochtemperaturbeständiger Keramik wie Zirkoniumoxid oder Siliziumkarbid besteht, kann der zum Filtern verwendete Körper durch Ausbrennen gereinigt werden, wobei die Filterrückstände verbrennen. Hierbei wird der Filter nicht beschädigt. Insbesondere ist der erfindungsgemäße poröse Körper gleichzeitig zum Mischen und Filtern von Fluiden geeignet.

Je nach Form des porösen Körpers und nach Lage der Ein- und Austrittsfläche variiert die Durchströmungsrichtung. Handelt es sich beispielsweise um einen zylindrischen Körper, dessen Stirnseiten die Ein- und Austrittsfläche bilden, ist die Durchströmungsrichtung geradlinig. Bei einem gekrümmten oder beliebig anders geformten porösen Körper entspricht die Mittellinie des Körpers der Durchströmungsrichtung, so dass die Durchströmungsrichtung in Längsrichtung des Körpers variiert.

Die Kanäle des porösen Körpers sind vorzugsweise in Reihen angeordnet, wobei mindestens eine Reihe erster Kanäle und eine Reihe zweiter Kanäle vorgesehen ist und die Kanalreihen alternierend nebeneinander und parallel zueinander angeordnet sind.

Bei einer bevorzugten Ausführungsform ist der poröse Körper zylindrisch und die ersten und/oder zweiten Kanäle erstrecken sich von der Eintrittsfläche bis zur Austrittsfläche des Körpers. Hierbei wird unter zylindrisch verstanden, dass es sich um einen langgestreckten Körper mit zueinander parallelen Stirnflächen handelt, die den gleichen, jedoch einen beliebigen Umriss aufweisen. Der Umriss kann je nach Gegebenheiten der Vorrichtung in der der poröse Körper verwendet wird beispielsweise eine Kurve oder ein Polygon sein.

Neben der Verwendung des porösen Körpers als chemischer Mischer zum Mischen von Fluiden und als Filter zum Ausfiltern von Partikeln aus Fluiden ist der erfindungsgemäße poröse Körper insbesondere auch im Brennraum eines Porenbrenners einsetzbar.

Porenbrenner weisen ein Gehäuse mit Ein- und Auslass auf, wobei durch den Einlass ein Gas-Luft-Gemisch in den Porenbrenner einströmt und durch den Auslass die Abgase aus dem Porenbrenner abgeführt werden. In Durchströmungsrichtung des Porenbrenners strömt das Gas-Luft-Gemisch vor dem Entzünden durch eine Rückschlageinrichtung. Als Rückschlageinrichtung ist beispielsweise ein konventioneller Flammenhalter oder eine Lochplatte vorgesehen. Durch die Rückschlageinrichtung ist verhindert, dass das in Durchströmungsrichtung hinter der Rückschlageinrichtung verbrennende Gas-Luft-Gemisch in Richtung der Einlassöffnung zurückschlägt. An die Rückschlageinrichtung schließt sich der Brennraum an, in dem das Gas-Luft-Gemisch durch eine Zündeinrichtung gezündet wird und in diesem verbrennt. Porenbrenner zeichnen sich dadurch aus, dass in dem Brennraum ein hitzebeständiges poröses Material vorgesehen ist, in dem das Gas-Luft-Gemisch verbrennt. Dadurch findet ein gleichmäßigeres Verbrennen des Gas-Luft-Gemisches statt, so dass innerhalb eines großen Leistungsbereichs des Porenbrenners bei der Verbrennung nur geringe Mengen Schadstoffe wie beispielsweise NOₓ oder CO entstehen. Durch den Einsatz des erfindungsgemäßen porösen Körpers in dem Brennraum des Porenbrenners wird der Schadstoffausstoß weiter reduziert. So findet bereits bei einem Dreißigstel der Nennleistung des Porenbrenners eine saubere Verbrennung statt. Der Porenbrenner ist insbesondere zum Einsatz in Heizungsanlagen geeignet.

Eine weitere Verwendung des erfindungsgemäßen porösen Körpers besteht in seiner Verwendung als Wärmespeicher. Aufgrund der porösen Struktur des Körpers und den diesen durchziehenden Kanälen wird das den porösen Körper durchströmende Fluid über den Querschnitt des Körpers homogen verteilt, so dass beim Durchströmen des Körpers von heißem Fluid die Wärme gleichmäßig von dem porösen Körper aufgenommen wird. Beim anschließenden Durchströmen von kühlerem Fluid wird die Wärme von dem porösen Körper gleichmäßig an das Fluid abgegeben, so dass eine gleichmäßiger Erwärmung des Fluids stattfindet. Der erfindungsgemäße poröse Körper ist somit sehr gut als kurzund mittelfristiger Wärmespeicher geeignet.

Insbesondere ist der poröse Körper als Wärmespeicher für regenerative Strahlungsbrenner einsetzbar. Regenerative Strahlungsbrenner dienen zum Erwärmen von Material wie beispielsweise Stahlbrammen durch Wärmestrahlung. Hierzu werden zwei Strahlungsbrenner, die im Intervallbetrieb arbeiten, eingesetzt. Je Brenner ist ein poröser Körper als Wärmetauscher vorgesehen. Ferner ist eine Gebläse- bzw. eine Saugvorrichtung vorhanden, um den Brennern im Intervallbetrieb entweder ein Brennstoff-Luft-Gemisch bzw. Frischluft zuzuführen oder die Abgase abzuführen. Während des ersten Zyklus wird von dem Gebläse Frischluft oder ein Gas-Luft-Gemisch durch den Wärmetauscher des ersten Brenners zum Brennkopf geführt, in dem entweder die Frischluft mit Brennstoff vermischt und gezündet oder das Brennstoff-Luft-Gemisch direkt gezündet wird. Von der Brennerflamme des ersten Brenners wird in dem ersten Zyklus das oberhalb des Brenners befindliche Material durch Strahlungswärme erwärmt. Währenddessen werden die Abgase durch den Wärmetauscher des zweiten Brenners abgeführt, wobei dieser erwärmt wird. Hierzu kann das gleiche Gebläse oder eine gesonderte Saugvorrichtung eingesetzt werden. Im zweiten Zyklus wird die Funktion der beiden Brenner vertauscht, so dass Frischluft oder ein Gas-Luft-Gemisch durch den Wärmetauscher des zweiten Brenners geführt und hierbei erwärmt wird. Im Brennerkopf des zweiten Brenners wird das erwärmte Gas-Luft-Gemisch gezündet. Im zweiten Zyklus wird das Material durch die Strahlungswärme der Flamme des zweiten Brenners erwärmt und die Abgase werden durch den Wärmetauscher des ersten Brenners abgeführt. Durch das Vorsehen der Wärmespeicher in jedem der beiden Brenner wird das Gas-Luft-Gemisch bzw. die Frischluft vorgewärmt, so dass der Wirkungsgrad der Strahlungsbrenner erheblich verbessert wird. Durch das erfindungsgemäße Verwenden der porösen Körper aus temperaturbeständigem Material, vorzugsweise aus Keramik ist verhindert, dass auch bei sehr hohen Temperaturen lokale Beschädigungen des Wärmetauschers auftreten. Durch das Verwenden des porösen Körpers als Wärmespeicher kann die Frischluft auf etwa 1000° C vorgeheizt werden. Zusätzlich dienen die porösen Körper als Abgasfilter.

Zum Herstellen des von Fluid durchströmbaren, porösen Körpers aus temperaturbeständigem Material, insbesondere aus Keramik mit diesen durchziehenden Kanälen wird mit der Erfindung ein Verfahren vorgeschlagen, bei dem
- mindestens ein Kunststoffschaumkörper mit einer Oberseite und einer Unterseite aus einem flexiblen Kunststoffschaummaterial erzeugt wird,
- der Schaumkörper um einen Scherwinkel in eine erste Richtung geschert wird, indem er einer ersten Scherkraft ausgesetzt wird,
- in den so gescherten Kunststoffschaumkörper von der Oberseite und/oder der Unterseite erste Kanäle eingebracht werden, und zwar in einem vom ersten Scherwinkel verschiedenen Winkel zur Normalen der Oberseite und/oder der Unterseite,
- die erste Scherkraft wieder aufgehoben wird, wobei sich der Kunststoffschaumkörper wieder zurückstellt,
- die Oberfläche des Kunststoffschaumkörpers mit einem aushärtenden temperaturbeständigen Benetzungsmaterial benetzt wird und
- das Kunststoffmaterial des mit Benetzungsmaterial benetzten Kunststoffschaumkörpers entfernt wird.

Das erfindungsgemäße Verfahren beruht auf dem Kerngedanken, in eine flexible Schaumstruktur zunächst diese durchziehende Kanäle einzubringen. Diese Kanäle verlaufen zwecks verbesserter Durchmischung des den Körper durchströmenden Fluids schräg zur axialen Erstreckung des Körpers. Man könnte diese schrägverlaufenden Kanäle unter einem Winkel von ungleich 90° zur Ober- bzw. Unterseite der Schaumstruktur bzw. des Schaumkörpers einbringen. Dies erschwert jedoch den Fertigungsprozess, was insbesondere in der flexiblen Struktur des Schaumkörpers begründet ist. Bei dem Verfahren zur Herstellung des erfindungsgemäßen porösen Körpers wird daher vorgeschlagen, den Schaumkörper zu scheren, d.h. auf den Schaumkörper Scherkräfte einwirken zu lassen. Jetzt können die Kanäle unter einem Winkel von insbesondere 90° zur Ober- bzw. Unterseite des gescherten Schaumkörpers eingebracht werden. Wird danach die auf den Schaumkörper wirkende Scherkraft aufgehoben, so dass sich der Schaumkörper in seinem entspannten Zustand befindet, so verlaufen die den Schaumkörper durchziehenden Kanäle schräg.

Auf die zuvor beschriebene Weise lassen sich in einer ersten Richtung verlaufende erste Kanäle in den Kunststoffschaumkörper einbringen. Anschließend wird der Schaumkörper mit temperaturbeständigem Benetzungsmaterial benetzt und der Kunststoffschaumkörper entfernt.

Wird der Kunststoffschaumkörper nach Einbringung der ersten Kanäle in einer anderen Richtung geschert, die vorzugsweise entgegengesetzt zur Wirkrichtung der zuvor aufgebrachten Scherkraft gerichtet ist, so lassen sich zweite Kanäle in den Schaumkörper einbringen, die in einer zu den ersten Kanälen verschiedenen Richtung durch den Schaumkörper verlaufen. Der Kunststoffschaumkörper ist damit von zwei Gruppen von Kanälen durchzogen, die unterschiedliche Ausrichtungen aufweisen.

In Abhängigkeit von der Größe der Scherkräfte und deren Wirkrichtungen lassen sich unterschiedlich stark geneigt verlaufende Kanäle in einen Kunststoffschaumkörper einbringen. Die Ausrichtung der Kanäle hängt nicht zuletzt auch davon ab, unter welchem Winkel sie in den gescherten Schaumkörper eingebracht werden.

Die Verfahrensschritte des Scherens des Kunststoffschaumkörpers und des Einbringen von Kanälen können auch gleichzeitig durchgeführt werden. Hierzu kann beispielsweise ein Stanzwerkzeug auf die Ober- oder Unterseite des unverformten Schaumkörpers, auf den noch keine Scherkräfte wirken, aufgesetzt werden. Sobald das Stanzwerkzeug eine Seite des Schaumkörpers berührt, wird es bezüglich der gegenüberliegenden Seite des Kunststoffschaumkörpers verschoben, so dass auf den Schaumkörper Scherkräfte wirken. Der Stanzvorgang wird entweder nach Erreichen des gewünschten Scherwinkels oder bereits während des Schervorgangs durchgeführt. Es ist somit ausreichend, das Stanzwerkzeug während des Stanzvorgangs bezüglich der gegenüberliegenden Seite des Schaumkörpers zu verschieben, so dass auf den Schaumkörper Scherkräfte wirken.

Damit die in den Schaumkörper gestanzten Kanäle einen möglichst kreisrunden Querschnitt haben, kann der Schaumkörper vor oder während dem Stanzen zusammengedrückt und dadurch komprimiert werden.

In der allgemeinsten Form ist das wesentliche des erfindungsgemäßen Verfahrens also darin zu sehen, eine Schaumstruktur zu schaffen, die von schräg verlaufenden Kanälen durchzogen ist, wobei diese Kanäle gruppenweise parallel zueinander verlaufen und in mehrere Gruppen von zueinander unterschiedlich verlaufenden Kanälen unterteilt werden kann.

Zweckmäßigerweise werden mehrere derartig hergestellte Schaumkörper übereinanderliegend angeordnet und anschließend benetzt und ausgehärtet, wobei beim Aushärten der Kunststoffschaumkörper entfernt wird, so dass auf diese Weise ein von einem Fluid durchströmbarer poröser Körper mit Mischereigenschaften erzeugt werden kann, und zwar ohne durch den Herstellungsprozess bedingte Längenbeschränkungen. Die einzelnen Schaumkörper werden vorzugsweise als geometrisch beliebiges Tafelmaterial mit zueinander parallelen Ober- und Unterseiten erzeugt.

Die Einbringung der Kanäle in den Schaumkörper erfolgt vorzugsweise durch Stanzen. Eine derartige Stanze weist zwei Andrückteile auf, die mit Reibung an der Ober- und Unterseite des Schaumkörpers anliegen. Nachdem diese beiden Andrückteile in Reibschluss mit dem Kunststoffschaumkörper gebracht worden sind, wird zumindest das eine Andrückteil relativ zum anderen bewegt, so dass der dazwischen angeordnete Kunststoffschaumkörper geschert wird. Nun kann das Stanzwerkzeug in den Kunststoffschaumkörper eingefahren werden. Dabei bietet es sich an, den gescherten Kunststoffschaumkörper durch Aufeinanderzubewegen der Andrückteile so weit zu komprimieren, dass sich die Löcher mittels Stanzwerkzeugen einbringen lassen.

Zweckmäßig ist es ferner, wenn die Andrückteile gelocht sind, so dass die Stanzwerkzeuge durch die Löcher hindurch in den Kunststoffschaumkörper hineingebracht werden können. In demjenigen Zustand, in dem der Kunststoffschaumkörper gestanzt wird, sollten die Löcher der beiden Andrückteile miteinander fluchten.

Mit dem erfindungsgemäßen Verfahren lässt sich also ein von einem Fluid durchströmbarer poröser Körper herstellen, der entweder einen Kunststoffschaumkörper oder mehrere übereinander angeordnete Kunststoffschaumkörper aufweist, der bzw. von denen jeder ein oder mehrere um einen gemeinsamen Winkel oder unterschiedliche Winkel schräg verlaufende Kanäle aufweist. Aufgrund der porösen Struktur des Kunststoffschaummaterials sind diese Kanäle untereinander verbunden. Bei Verwendung mehrerer Kunststoffschaumkörper ist es zweckmäßig, wenn die Ausrichtung der aneinander grenzenden Kanäle benachbarter Schaumkörper jeweils unterschiedlich, insbesondere gegensinnig ist.

Bei dem Kunststoffschaummaterial handelt es sich zweckmäßigerweise um ein offenzelliges oder geschlossenzelliges Material. Insbesondere wird als Kunststoffschaummaterial Polyurethan eingesetzt.

Werden mehrere Kunststoffschaumkörper aneinanderliegend mit Benetzungsmaterial versehen, so ist es zweckmäßig, die Kunststoffschaumkörper vor der Benetzung untereinander zu verbinden. Hier bietet es sich an, die Kunststoffschaumkörper durch Erhitzung ihrer Anlageflächen miteinander zu verschweißen. Eine Alternative zu dieser Verbindung besteht darin, die Kopplung benachbarter Kunststoffschaumkörper durch das ausgehärtete Benetzungsmaterial zu realisieren.

Da der Kunststoffschaummaterialkörper bzw. die Anordnung aufeinanderfolgender Kunststoffschaummaterialkörper bei noch nicht ausgehärtetem Benetzungsmaterial noch flexibel ist, lässt er bzw. sie sich in gekrümmte oder in sonstiger Weise geformte Formen einlegen (beispielsweise Krümmer-Formen oder dergleichen), um dann in diesen Formen beispielsweise durch Brennen auszuhärten. Damit wird dem fertigen Produkt eine Form verliehen, die den platzsparenden Einbau in einer Mischeranlage oder einer Rohrleitung einer solchen Mischeranlage ermöglicht.

Mit den erfindungsgemäßen Verfahren ist es möglich, keramische Mischer herzustellen, die sich durch eine exzellente Vermischung des sie durchströmenden. Fluids auszeichnen. Wird ein derartiger erfindungsgemäß hergestellter poröser Körper beispielsweise zum Vermischen der Verbrennungsgase einer Brennkraftmaschine, wie beispielsweise im Falle eines Kraftfahrzeuges, eingesetzt, so kann ein ebenfalls verwendeter Katalysator näher an den Auslassventilen der Brennkraftmaschine angeordnet werden als es bisher möglich ist. Die bisher insbesondere im Fahrzeugbau eingesetzten Katalysatoren sollten einen Mindestabstand zu den Auslassventilen der Brennkraftmaschine aufweisen, da erst in einem gewissen Abstand hinter den Auslassventilen eine hinreichend gute Vermischung der Verbrennungsgase vorliegt, so dass deren Reinigung durch den Katalysator zufriedenstellend ist. Ein erfindungsgemäß hergestellter Mischer dagegen macht es möglich, den Abstand zwischen dem Katalysator und den Auslassventilen der Brennkraftmaschine zu verringern. Dies wiederum ist in Bezug auf die Reinigung der Verbrennungsgase von Vorteil, da nun in den Katalysator die Verbrennungsgase mit einer höheren Temperatur einströmen.

Bei den erfindungsgemäßen Verfahren ist als besonders vorteilhaft herauszustellen, dass zur Herstellung der Kunststoffschaummaterialkörper auf die üblichen Herstellungsprozesse für Schäume zurückgegriffen werden kann. Die zumeist in Form von Blöcken hergestellten Schäume müssen lediglich zu Tafelmaterial verarbeitet werden, was dann erfindungsgemäß geschert wird, um die Kanäle einzubringen. Die Herstellung von Blockschaum ist recht kostengünstig, so dass insgesamt nach dem erfindungsgemäßen Verfahren auch die starren von Fluid durchströmbaren Körper verhältnismäßig kostengünstig hergestellt werden können, wobei man insbesondere auf die wohlbeherrschte Technologie der Schaumherstellung zurückgreifen kann. Es sind insbesondere keine besonderen Formen für die Schaumherstellung erforderlich. Man greift also im Rahmen des erfindungsgemäßen Herstellungsverfahrens auf ein Halbzeug, nämlich Kunststoffschaum-Tafelmaterial zurück, was extrem kostengünstig angeboten wird. Auch die weiteren Verfahrensschritte, insbesondere die Einbringung der schrägverlaufenden Kanäle erfolgt erfindungsgemäß auf einfache und produktionstechnisch kostengünstige Art und Weise.

Nachfolgend werden anhand der Figuren bevorzugte Ausführungsbeispiele des erfindungsgemäßen porösen Körpers und der Verfahren zu dessen Herstellung näher erläutert. Im einzelnen zeigen:
- Fig. 1: eine schematische Schnittansicht: einer ersten Ausführungsform des erfindungsgemäßen porösen Körpers,
- Fig. 2: eine schematische Schnittansicht des in Fig. 1 dargestellten porösen Körpers entlang der Linie II-II,
- Fig. 3: eine schematische perspektivische Schnittansicht einer zweiten Ausführungsform des endungsgemäßen porösen Körpers,
- Fig. 4: eine schematische Schnittansicht des in Fig. 3 dargestellten porösen Körpers,
- Fign. 5 bis 9: die einzelnen Herstellungsschritte zur Erzeugung eines von Kanälen durchzogenen Kunststoffschaummaterialkörpers, aus dem der in Fign. 1 und 2 dargestellte poröse Körper hergestellt wird,
- Fign. 10 und 11: die für die Herstellung eines flexiblen Kunststoffschaummaterialkörpers mit diesen durchziehenden Kanälen erforderlichen Formen bzw. Einsatzteile zur Herstellung einer weiteren Ausführungsform des porösen Körpers gemäß der Erfindung,
- Fign. 12 und 13: die Herstellung eines flexiblen Kunststoffschaummaterialkörpers mit diesen durchziehenden Kanälen in Wickeltechnik zur Herstellung einer weiteren Ausführungsform des porösen Körpers gemäß der Erfindung,
- Fign. 14 bis 18: schematisch die einzelnen Herstellungsschritte zur Erzeugung eines von schrägverlaufenden Kanälen durchzogenen Kunststoffschaummaterialkörpers zur anschließenden Herstellung einer weiteren Ausführungsform des porösen Körpers,
- Fig. 19: einen Schnitt durch einen aus mehreren gemäß den Fign. 14 bis 18 erzeugten Kunststoffschaummaterialkörpern aufgebauten Schaumkörper,
- Fig. 20: eine perspektivische Ansicht eines Kunststoffschaumkörpers, teilweise aufgebrochen,
- Fign. 21 bis 24: schematisch die einzelnen Herstellungsschritte zur Erzeugung eines von schrägverlaufenden Kanälen durchzogenen Kunststoffschaummaterialkörpers gemäß dem erfindungsgemäßen Herstellungsverfahren,
- Fig. 25: eine schematische Darstellung eines Porenbrenners mit einem in dessen Heizraum angeordneten porösen Körper, und
- Fign. 26 und 27: schematische Darstellungen der beiden Zyklen eines regenerativen Strahlungsbrenners, in dem poröse Körper als Wärmespeicher verwendet sind.

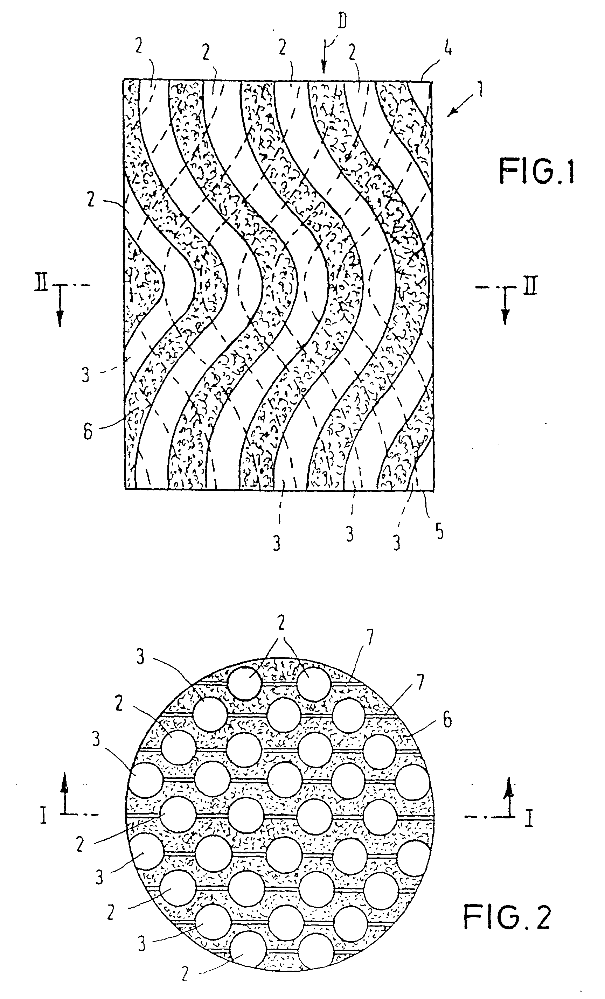

In den Fign. 1 und 2 ist eine erste Ausführungsform eines porösen Körpers 1 dargestellt. Der poröse Körper 1 weist wellenförmige erste Kanäle 2 und zweite Kanäle 3 auf, die sich von einer Eintrittsfläche 4 bis zu einer Austrittsfläche 5 erstrecken. Die Kanäle 2 liegen in der Schnittfläche der Fig. 1 und die Kanäle 3 hinter dieser Schnittfläche. Die Wellenform der Kanäle 2 und 3 ist identisch. Die Kanäle 2 und 3 sind versetzt zueinander angeordnet, so dass die Wellenformen gegenläufig, d.h. in Längsrichtung der Kanäle 2,3 nicht parallel sind. Ein durch den porösen Körper 1 einströmendes Medium strömt in Durchströmungsrichtung D an der Eintrittsfläche 4 in den porösen Körper 1 ein und an der Austrittsfläche 5 aus diesem aus. Zur Homogenisierung des Fluides weisen die wellenförmigen Kanäle 2,3 entlang ihrer Erstreckung gegenüber der Durchströmungsrichtung D einen spitzen Winkel auf. Die Erstreckung der Kanäle 2,3 erfolgt in Richtung der Mittellinien der Kanäle 2,3 von der Eintrittsfläche 4 zur Austrittsfläche 5. Da die Kanäle 2,3 wellenförmig sind, variiert der spitze Winkel zur Durchströmungsrichtung D, wobei der Winkel am Scheitelpunkt der einzelnen Krümmungen jeweils 0 ist. Da der Winkel jedoch nur an den Scheitelpunkten 0 ist und ansonsten stets ein spitzer Winkel ungleich 0° zwischen der Durchströmungsrichtung D und der Erstreckung der Kanäle 2,3 auftritt, findet eine gute Vermischung und Homogenisierung der Fluide statt. Da zwischen den Kanälen poröses Material 6 vorgesehen ist, strömt das Fluid nicht nur durch die Kanäle 2,3 sondern auch durch das poröse Material 6 des porösen Körpers 1, so dass zwischen den Kanälen 2,3 eine Verbindung besteht.

Die zweiten Kanäle 3 sind gegenüber den ersten Kanälen 2 versetzt angeordnet, so dass in Durchströmungsrichtung D zwischen den Kanälen 2,3 ein Winkel ungleich 0° auftritt.

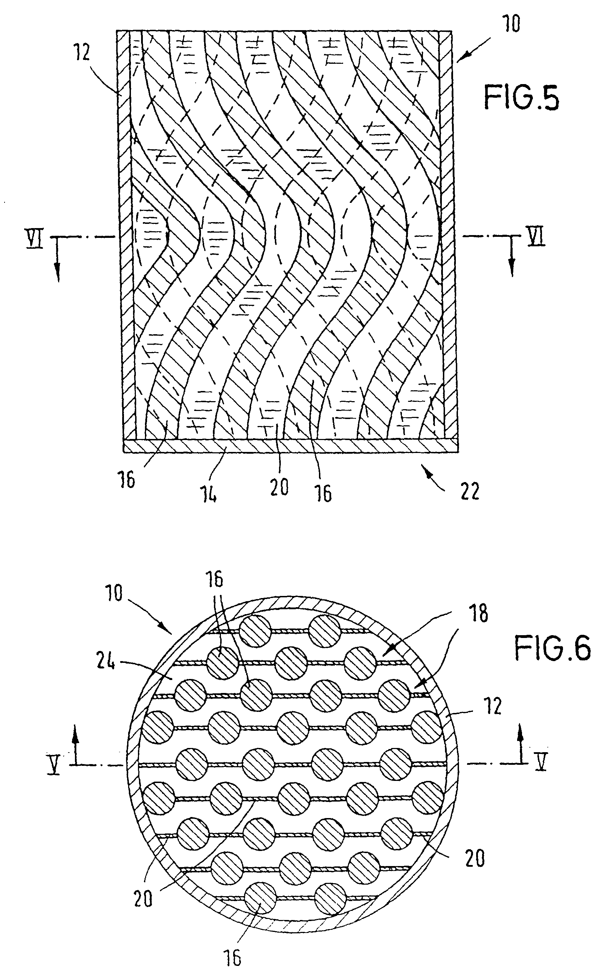

Eine weitere Verbindung zwischen den Kanälen 2 bzw. den Kanälen 3 besteht jeweils innerhalb einer Kanalreihe (Fig. 2). Die Verbindungskanäle 7 sind herstellungsbedingt. Die Herstellung des in den Fign. 1 und 2 dargestellten porösen Körpers wird anhand der Fign. 5 bis 9 beschrieben.

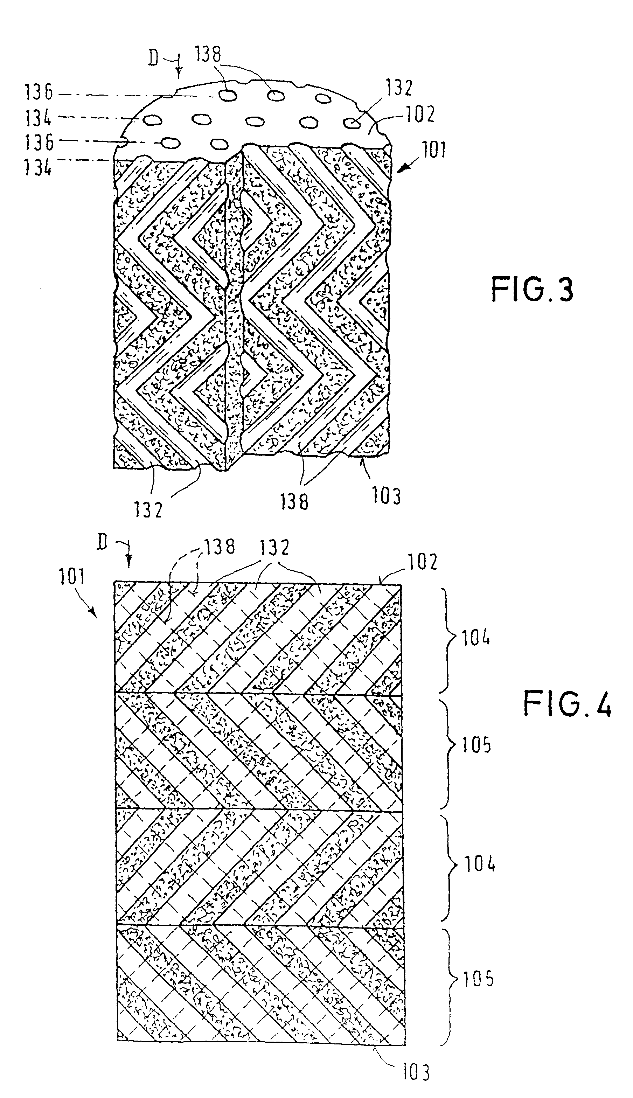

In den Fign. 3 und 4 ist eine zweite Ausführungsform eines erfindungsgemäßen porösen Körpers 101 dargestellt. Der poröse Körper 101 ist von einer Eintrittsfläche 102 in Richtung einer Austrittsfläche 103 mit ersten Kanäle 132 und zweiten Kanälen 138 durchzogen. Die Kanäle 132,138 weisen zur Durchströmungsrichtung D stets einen spitzen Winkel auf. Da die Kanäle 138,132 zickzackförmig sind, variiert der Winkel der Kanäle 132,138 zur Durchströmungsrichtung D entlang der Erstreckung der Kanäle 132,138, d.h. entlang der Mittellinie der Kanäle 132,138. Der in Durchströmungsrichtung D kreiszylinderförmige poröse Körper 101 kann in mehrere Abschnitte 104,105 (Fig. 4) unterteilt werden. Innerhalb dieser Abschnitte sind die ersten Kanäle 132 und die zweiten Kanäle 138 stets geradlinig, wobei die ersten Kanäle 132 zu den zweiten Kanälen 138 einen Winkel von etwa 90° und zur Durchströmungsrichtung D jeweils einen spitzen Winkel von etwa 45° einschließen.

Die Abschnitte 104,105 können auch so aneinander angrenzend ausgebildet sein, dass die Kanäle 132,138 benachbarter Abschnitte zueinander versetzt, aber nicht zickzackförmig sind. Durch Kanäle 132,138 eines Abschnitts 104,105 strömendes Fluid ist somit gezwungen durch einen porösen Bereich zu strömen, bevor es in einen Kanal 132,138 des benachbarten Abschnitts gelangt. Die Kanäle können sich an der Grenzfläche benachbarter Abschnitte auch teilweise überdecken.

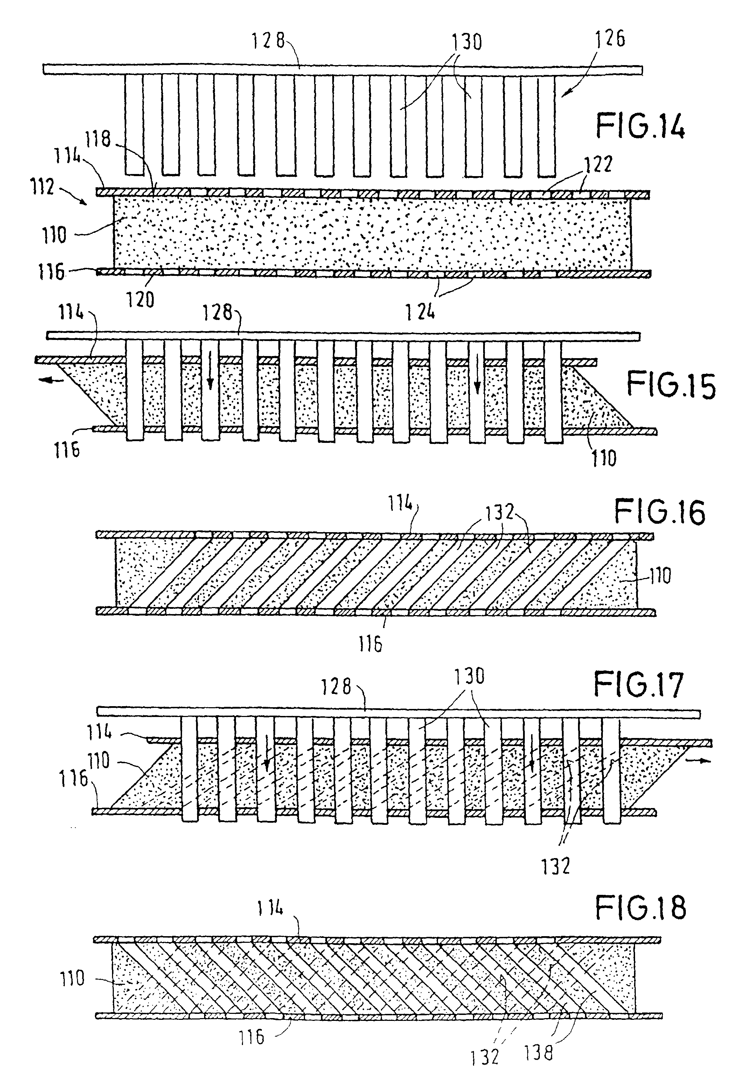

An der Grenzfläche zwischen zwei benachbarten Abschnitten 104,105 ändert sich der Winkel der ersten Kanäle 132 und der zweiten Kanäle 138. In dem in Fign. 3 und 4 dargestellten Beispiel beträgt die Winkeländerung etwa 90°. Vorzugsweise handelt es sich hierbei um eine Winkeländerung < 90°, so dass zwischen den Kanälen ein spitzer Winkel auftritt. Die Abschnitte 104 bzw. 105 sind identisch, so dass sich die Abschnitte 104,105 in Durchströmungsrichtung D periodisch wiederholen. Bei einem Winkel von etwa 90° zwischen den Kanälen in der Berührungsfläche zweier benachbarter Abschnitte 104,105 kann der poröse Körper 101 aus identischen Teilen zusammengesetzt werden. Die einzelnen Teile sind hierbei so angeordnet, dass benachbarte Abschnitte 104,105 zur Berührungsebene spiegelbildlich angeordnet sind. Dadurch ist die Herstellung der einzelnen Abschnitte erheblich vereinfacht. Die Herstellung des porösen Körpers 101 wird anhand der Fign. 14 bis 20 beschrieben.

Fig. 5 zeigt einen Längsschnitt durch eine zylindrische Form 10, die aus einer Hülse 12 und einem eines der beiden stirnseitigen Enden verschließenden Bodenteil 14 besteht. Vom Bodenteil 14 ragen eine Vielzahl von schlangenlinienförmigen, im wesentlichen zylindrischen Verdickungen 16 auf, die, wie insbesondere anhand von Fig. 6 deutlich wird, in mehreren parallelen Reihen 18 nebeneinanderliegend angeordnet sind. Die schlangenlinienförmigen Verdickungen 16 einer jeder Reihe 18 sind durch dünne Verbindungsstege 20 miteinander verbunden. Diese dünnen Verbindungsstege 20 erstrecken sich wie die Verdickungen 16 über die gesamte axiale Länge der Form 10. Diese dünnen Verbindungsstege 20 erstrecken sich auch von den der Hülse 12 jeweils benachbarten Verdickungen 16 bis zur Innenwand der Hülse 12. Die Bodenplatte 14 mit den aufragenden Verdickungen 16 und den Verbindungsstegen 20 bildet ein Einsatzteil 22 zum Einsetzen in die Hülse 12 der Form 10.

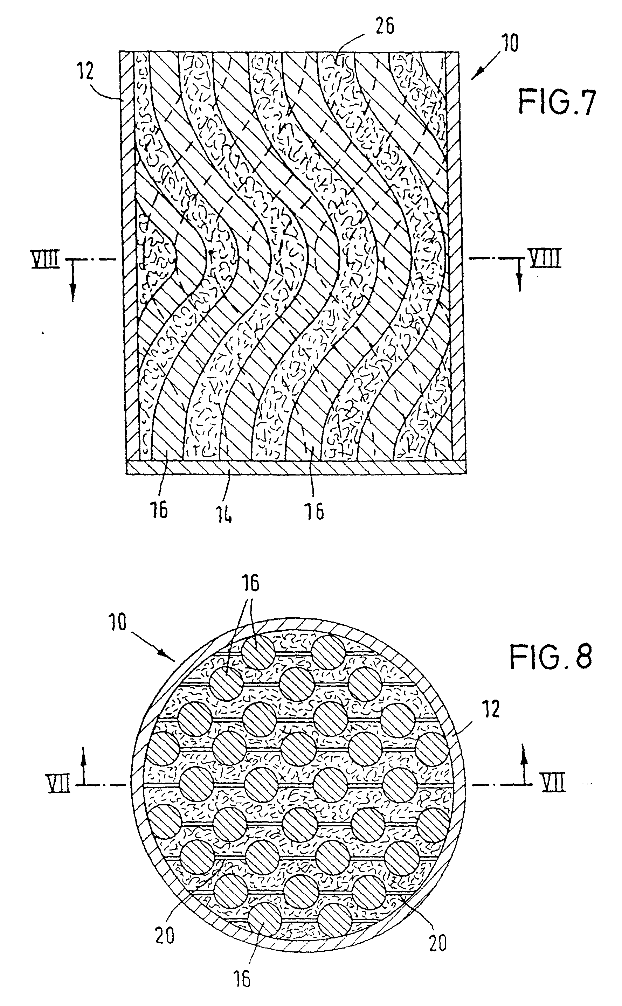

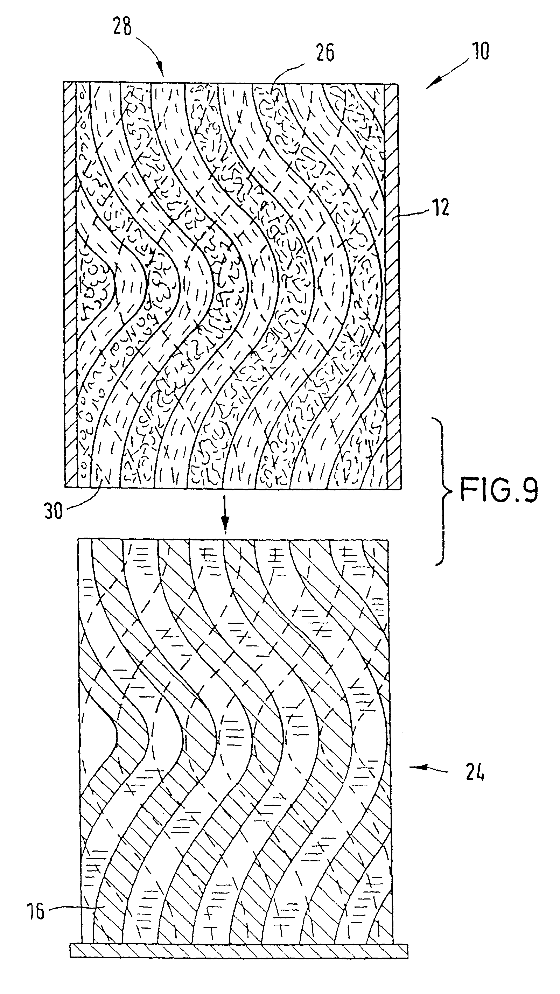

Wie insbesondere anhand von Fig. 6 zu erkennen ist, bilden sich zwischen benachbarten Reihen 18 von Verdickungen 16 und Verbindungsstegen 20 Hohlräume 24. Diese Hohlräume 24 sind in dem in Fig. 7 bildlich dargestellten Schritt mit einem PU-Kunststoffschaummaterial 26 ausgefüllt. Dieses Kunststoffschaummaterial 26 bleibt auch nach seiner Aushärtung flexibel, so dass das gesamte Einsatzteil 22 aus der Form 10 herausgezogen werden kann, was in Fig. 9 dargestellt ist. Es entsteht auf diese Weise also ein PU-Formkörper 28, der diesen durchziehende Kanäle 30 aufweist, deren Verlauf durch den Verlauf der Verdickungen 16 bestimmt ist.

Alternativ kann vorgesehen sein, dass das Kunststoffschaummaterial 26 zusammen mit den in diesem noch eingebetteten Einsatzteilen 22 aus der Hülse 12 herausgenommen wird, um erst danach die Einsatzteile 22 aus dem Kunststoffschaummaterial 26 zu entnehmen. Grundsätzlich kann es zusätzlich von Vorteil sein, die Hülse 12 zweiteilig auszubilden, um den Entnahmevorgang des Kunststoffschaummaterials 26 ggf. zusammen mit den Einsatzteilen 22 zu erleichtern.

Anschließend wird dieser PU-Formkörper 28 aus der Hülse 12 der Form 10 entnommen und mit Keramikschlicker getränkt. Nach Aushärtung des Keramikschlickers wird der Keramikkörper erhitzt, so dass das Kunststoffschaummaterial durch Verdampfung entfernt wird. Das endgültige Produkt stellt dann einen porösen Körper aus keramischem Material (Fign. 1 und 2) dar, der von einzelnen Kanälen 30 durchzogen ist, die untereinander aufgrund der porösen Struktur des keramischen Mischers fluidmäßig verbunden sind.

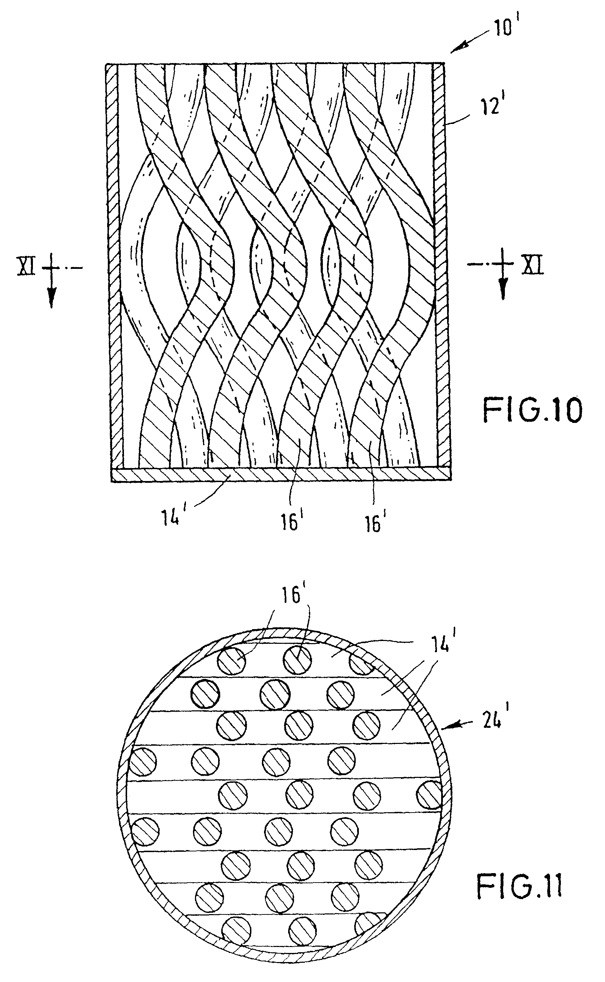

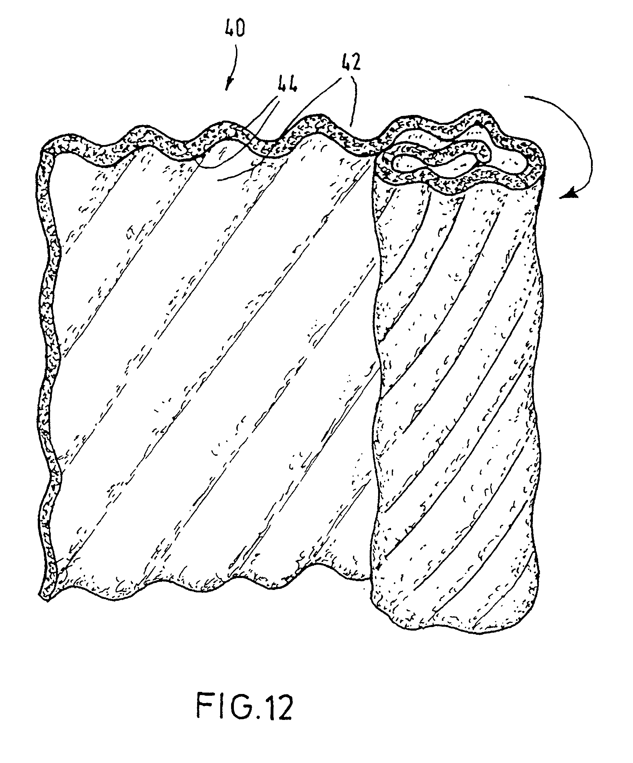

In den Fign. 10 und 11 ist eine zur Form 10 alternative Form 10' gezeigt, die eine zylindrische Wandung 12 aufweist. Von einem der beiden stirnseitigen Enden aus sind in die Form 10' mehrere Einsatzteile 24' eingesetzt, die ein geradliniges schmales leistenförmiges Bodenteil 14 mit mehreren von diesem aufragenden schlangenlinienförmigen und im Querschnitt im wesentlichen zylindrischen Verdickungen 16' aufweisen. Die einzelnen schlangenlinienförmigen Verdickungen 16' können untereinander durch durchgehende Stege verbunden sein, wobei dies allerdings nicht zwingend erforderlich ist. Wie in der Darstellung gemäß Fig. 11 zu erkennen ist, liegen die einzelnen leistenförmigen Einsatzteile 14' dicht aneinander und füllen auf diese Weise den gesamten Querschnitt der Hülse 12' der Form 10' aus.

Die Verfahrensweise zur Herstellung eines keramischen Schaumkörpers unter Verwendung der Form 10' der Fign. 10 und 11 erfolgt analog dem im Zusammenhang mit den Fign. 5 bis 9 beschriebenen Herstellungsverfahren. Nach der Aushärtung des Kunststoffschaummaterials, das weiterhin flexibel ist, werden die einzelnen Einsatzteile 24' herausgezogen. Der auf diese Weise entstehende Kunststoffschaumkörper wird dann mit keramischem Schlicker benetzt, und zwar durch Tränken, um nach Aushärtung zum Entfernen des Kunststoffschaummaterials erhitzt zu werden.

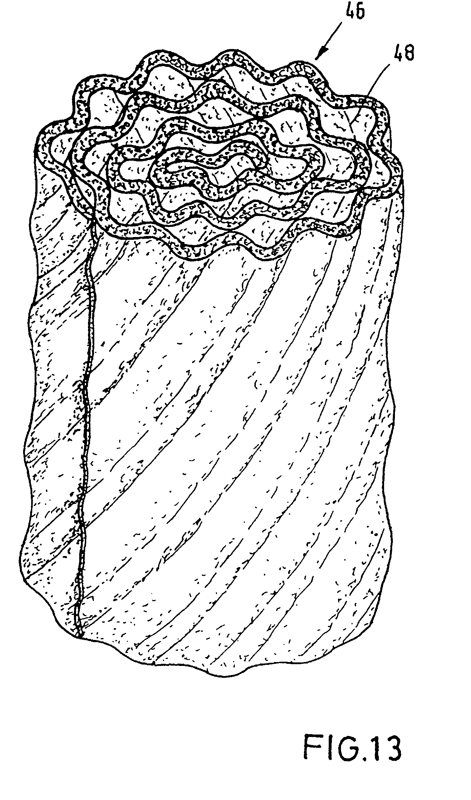

In den Fign. 12 und 13 ist eine weitere Alternative für ein Herstellungsverfahren eines keramischen Schaumkörpers dargestellt.

Diese Herstellungsvariante sieht zunächst die Herstellung einer gewellten Matte 40 aus flexiblem Kunststoffschaummaterial vor. Diese Matte 40 weist winklig verlaufende geradlinige Vertiefungen 42 bzw. Erhebungen 44 auf. Durch Aufwickeln der Matte 40 zu einem Wickelkörper 46 (siehe Fig. 9) entsteht ein Gebilde aus Kunststoffschaummaterial, das in axialer Erstreckung von mehreren Kanälen 48 durchzogen ist. Der Wickelkörper 46 wird insbesondere durch Klebematerial in seiner Form zusammengehalten und mit keramischem Schlicker benetzt. Der nach Aushärtung so entstandene keramische Schaum wird erhitzt, um das Kunststoffmaterial durch Verdampfen zu entfernen.

Für die anhand der Fign. 14 bis 24 beschriebenen Verfahren zur Herstellung eines erfindungsgemäßen porösen Körpers wird jeweils Schaum verwendet, der in seinen üblichen Produktionsgrößen (beispielsweise 60 m x 1,5 m x 0,8 m) als Block hergestellt wird. Bei diesem Schaum handelt es sich insbesondere um geschlossenzelliges Material, das in einem zweiten an sich gängigen Verfahren mittels kontrollierter Druckwelle bzw. Explosion bearbeitet wird, so dass die geschlossenen Zellen des Schaums geöffnet werden. Auf diese Weise entsteht ein Block aus offenporigem Schaum.

Dieser Schaumblock wird in beispielsweise 25 mm dicke Schaummatten 110 (oben auch mit Schaumkörper oder Kunststoffschaummaterialkörper bezeichnet) geschnitten (Tafelmaterial). Jede dieser Matten 110 wird bei dem Verfahren gemäß Fign. 14 bis 18 in ein Werkzeug 112 eingelegt, das zwei zueinander parallele und aufeinander zu sowie voneinander weg verfahrbare Andrück- bzw. Anlage-Lochplatten 114,116 aufweist. Die obere Lochplatte 114 liegt an der Oberseite 118 der Schaummatte 110 an, während die untere Lochplatte 116 an der Unterseite 120 der Schaummatte 110 anliegt. Diese Situation ist in Fig. 14 gezeigt.

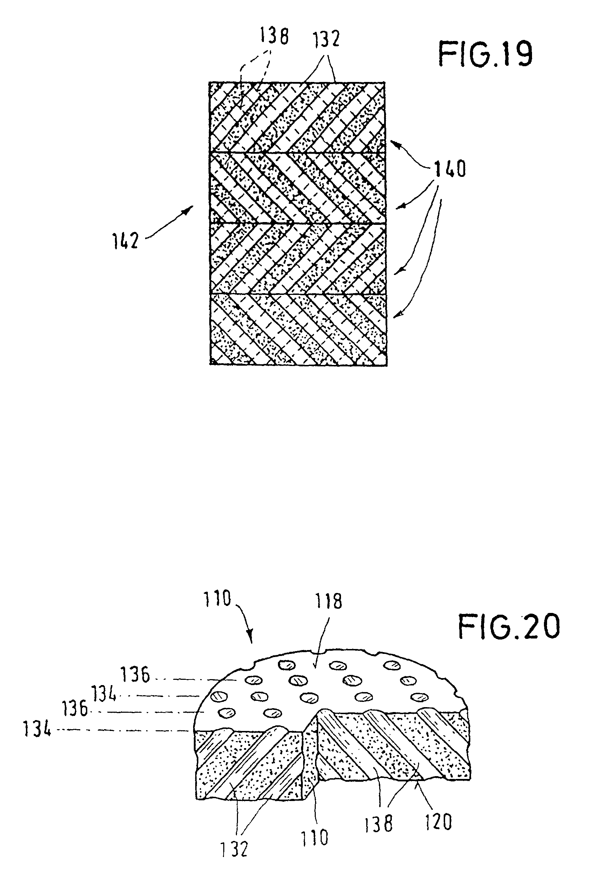

Durch Bewegen mindestens einer der beiden Lochplatten 114,116 in der Ebene ihrer Erstreckung wird die Schaummatte 110 gemäß Fig. 15 geschert. Hierzu ist es erforderlich, dass die Platten 114,116 mit einer gewissen Haftreibung an der Schaummatte 110 anliegen. Beispielsweise ist es möglich, dass die Platten 114,116 Dorne oder dergleichen Vorsprünge aurweisen, die in die Ober- bzw. Unterseite 118,120 eintauchen und sich dort verhaken.

Nach dem Relativ-Verfahren der beiden Platten 114,116 fluchten die in der oberen Platte 114 eingebrachten Löcher 122 mit den Löchern 124, die in der unteren Platte 116 angeordnet sind. Anschließend werden die Platten 114,116 aufeinander zu bewegt, so dass die dazwischen angeordnete Schaummatte 110 im gescherten Zustand durch elastische Verformung kompensiert wird (in den Figuren nicht enthalten). Jetzt kann ein Stanzwerkzeug 126 durch die miteinander fluchtenden Löcher 122,124 und der zwischen diesen angeordnete Schaummatte 110 hindurchgetrieben werden. Das Stanzwerkzeug 126 weist eine Halteplatte 128 mit insbesondere rohrförmigen Schneid- bzw. Stanzelementen 130 auf, die von der Halteplatte 128 entsprechend dem Muster und der Anordnung der Löcher 122 bzw. 124 abstehen. Mit diesen Schneid- bzw. Stanzelementen 130 lassen sich gemäß Fig. 15 erste Kanäle 132 in die gescherte Schaummatte 110 einbringen.

Nach diesem Vorgang werden die beiden Andrückplatten 114,116 wieder in ihre Ausgangsposition zurückbewegt, so dass die Schaummatte 110 wieder ihre ursprüngliche Form (entspannter Zustand) annimmt. Wie in Fig. 16 zu erkennen ist, laufen die in Richtung der Normalen zu der Ober- und Unterseite 118,120 der gescherten Schaummatte 110 in diese eingebrachten Kanäle 132 nun schräg, wobei der Winkel abhängig von der zuvor auf die Matte 110 aufgebrachten Scherung ist.

Der oben beschriebene Vorgang geschieht also in der Weise, dass die Schaummatte 110 zunächst von den Andrückplatten 114,116 mehr oder weniger stark zusammengedrückt und dann in Trapezform geschert wird. Danach wird der Stanzvorgang in Normalrichtung zur Ober- und Unterseite der Schaummatte 110 ausgeführt. Nach Zurückfahren des Stanzwerkzeuges 126 und nach Entspannen der Schaummatte 110 befinden sich in dieser die Kanäle 132, deren Ausrichtung im Winkel zur normalen der Ober- und Unterseiten der Schaummatte 110 verlaufen.

Nach dem obigen Verfahren wird eine erste Gruppe von in mehreren ersten Reihen 134 angeordneten ersten Kanälen 132 in die Schaummatte 110 eingebracht. Mehrere zweite Kanalreihen 136 mit zu den vorherigen Kanalreihen 134 jeweils entgegengesetzt ausgerichteten zweiten Kanälen 138 werden dadurch erzeugt, dass die Schaummatte 110 zwischen den Andrückplatten 114,116 in zum vorherigen Verfahrensschritt entgegengesetzter Richtung geschert und die Kanäle 132 nach Komprimierung der Schaummatte 110 dann anschließend mittels des Stanzwerkzeuges 126, das quer zur Bewegung der Andrückplatte 114 bzw. 116 verfahren wird, eingebracht werden (Fig. 17). So lässt sich die Schaummatte 110 mit einer Vielzahl von benachbarten Reihen 134,136 von Kanälen 132,138 durchsetzen, wobei die ersten Kanäle 132 ein und derselben Reihe jeweils parallel zueinander verlaufen und die zweiten Kanäle 138 benachbarter Reihen 136 entgegengesetzt zueinander ausgerichtet sind.

Aus den gemäß oben beschriebenen Verfahren hergestellten Schaummatten 110 werden Stücke ausgeschnitten, deren Form den Querschnitt des herzustellenden von Fluid zu durchströmenden Körpers entsprechen. Beispielsweise lassen sich aus den Schaummatten 110 Zylinderstücke 140 ausschneiden (Fig. 20). Mehrere derartige Zylinderstücke 140 werden gemäß Fig. 19 in axialer Richtung aneinander gesetzt, so dass die so entstehende Zylinderstückanordnung 142 von Kanälen durchzogen ist, die abschnittsweise zickzackförmig und damit gegenläufig verlaufen.

In einem weiteren Schritt wird die gesamte Struktur 142 mit Schlicker benetzt, der anschließend aushärtet. Über den ausgehärteten Schlicker sind die einzelnen Zylinderstücke 140 miteinander verbunden und bilden eine einzige Einheit, nämlich den porösen Körper (Fign. 3 und 4). Der Schlicker wird ausgebrannt, so dass ein Körper entsteht, der aus keramischem Schaum besteht. Dieser Körper weist keinerlei Kunststoffmaterial mehr auf, da dieses beim Brennen verdampft.

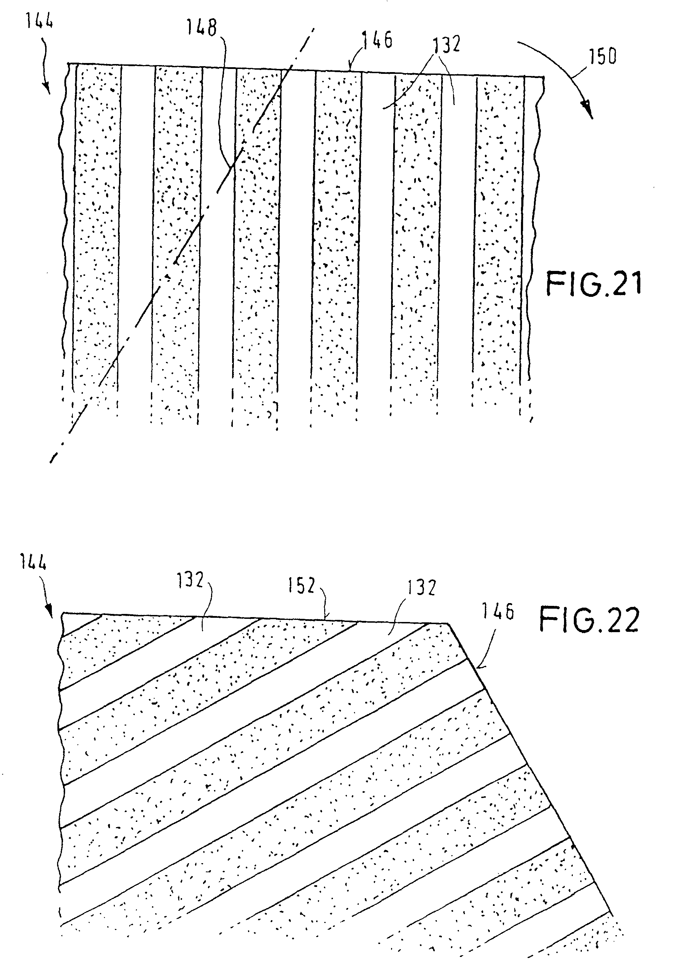

Ein alternatives Herstellungsverfahren zur Erzeugung eines Schaumkörpers 110' mit diesen durchsetzenden ersten und zweiten Kanälen 132,138 wird nachfolgend anhand der Schema-Darstellungen gemäß den Fign. 21 bis 24 erläutert. Ausgehend von einem Blockschaummaterial 144 werden in eine von dessen Außenflächen 146 erste Kanäle 132 eingebracht. Diese Kanäle 132 verlaufen im wesentlichen rechtwinklig zur Erstreckung der Außenfläche 146, in die sie eingebracht sind. Anschließend wird der Blockschaum 144 entlang der Linie 148 geschnitten. Nach Drehung des so geschnittenen Blockschaums 144 in Richtung des Pfeils 150 der Fig. 21 ergibt sich die Situation gemäß Fig. 22, in der die durch die Schnittlinie 148 definierte Schnittfläche 152 oben angeordnet ist und in einem spitzen Winkel zur Erstreckung der ersten Kanäle 132 verläuft.

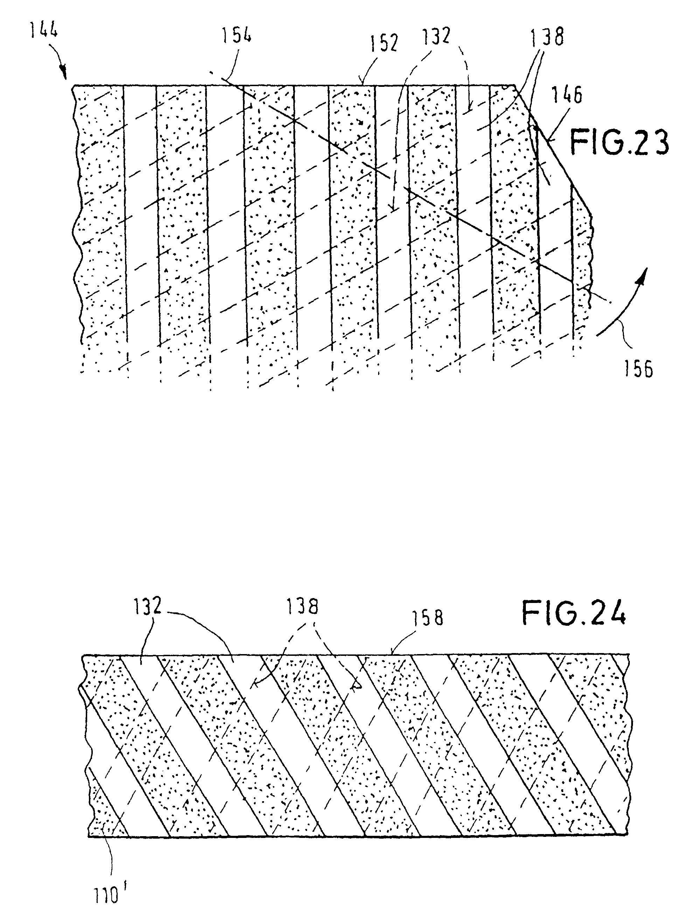

In diese Schnittfläche 152 werden nun gemäß Fig. 23 zweite Kanäle 138 eingebracht, die wiederum im wesentlichen rechtwinklig zur Schnittfläche 152 verlaufen. Danach wird der derart von ersten und zweiten Kanälen 132,138 durchzogene Blockschaum 144 entlang der Linie 154 geschnitten. Nach Drehung des so geschnittenen Blockschaums 144 in Richtung des Pfeils 156 ergibt sich die Situation gemäß Fig. 24, in der die sich entlang der Schnittlinie 154 ergebende Schnittfläche 158 oben angeordnet ist. Durch entsprechendes Zuschneiden entsteht die Schaumstoffmatte 110', die von sich kreuzenden ersten und zweiten Kanälen 132,138 durchzogen ist.

Der so hergestellte Schaumkörper wird anschließend mit Schlicker benetzt und ausgehärtet.

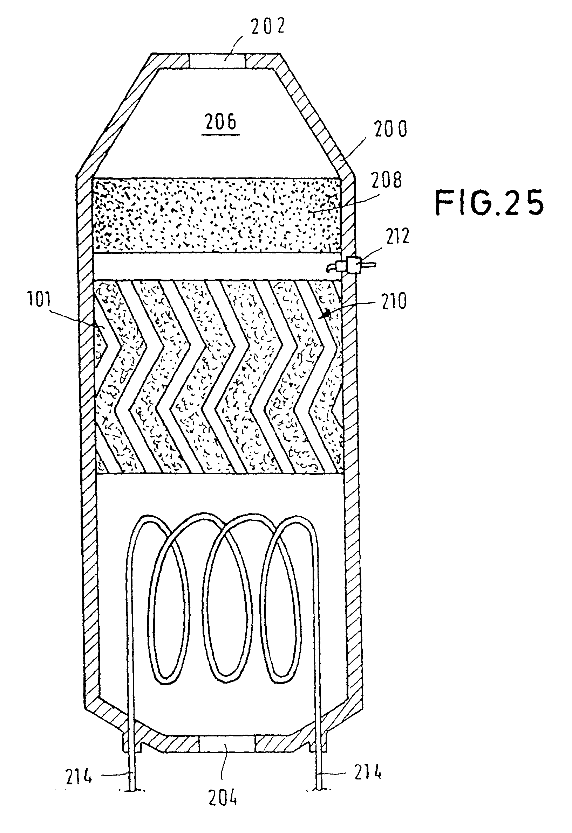

Der vorstehend beschriebene poröse Körper aus temperaturbeständigem, insbesondere keramischem Material ist insbesondere zum Einsatz in einem Porenbrenner (Fig. 25) geeignet. Derartige Porenbrenner werden beispielsweise in Heizungsanlagen eingesetzt, da die Nennleistung von Porenbrennem in großen Bereichen bei geringem Schadstoffausstoß regelbar ist. Ein Porenbrenner weist ein Gehäuse 200 mit einem Einlass 202 und einem Auslass 204 auf. Durch den Einlass 202 wird dem Porenbrenner ein Gas-Luft-Gemisch zugeführt. Das Gas-Luft-Gemisch gelangt in einen Vorraum 206 des Gehäuses 200 und strömt anschließend durch einen Flammhalter oder eine Lockplatte 208. Der Flammhalter 208 dient als Rückschlageinrichtung durch die ein Zurückschlagen der Flammen in den Vorraum 206 verhindert ist. Nach dem Durchströmen des Flammhalters 208 gelangt das Gas-Luft-Gemisch in einen Brennraum 210, in dem es von einer Zündeinrichtung 212 gezündet wird. Zur Homogenisierung der Verbrennung in dem Brennraum 210 ist in diesem ein erfindungsgemäßer poröser Körper 101 angeordnet. In dem in Fig. 25 dargestellten Beispiel eines Porenbrenners ist der in Fign. 3 und 4 dargestellte poröse Körper 101 verwendet. Es kann ebenso eine andere Ausführungsform eines porösen Körpers verwendet werden.

Beim Abführen der Verbrennungsgase aus dem Brennraum 210 werden die Verbrennungsgase an einem Wärmetauscher 214 vorbeigeführt und durch den Auslass 204 abgeführt. Durch den Wärmetauscher 214 strömt ein Wärmeübertragungsfluid. Beim Verwenden des Porenbrenners in herkömmlichen Heizungsanlagen ist der Wärmetauscher 214 direkt mit dem Wasserkreislauf der Heizungsanlage verbunden.

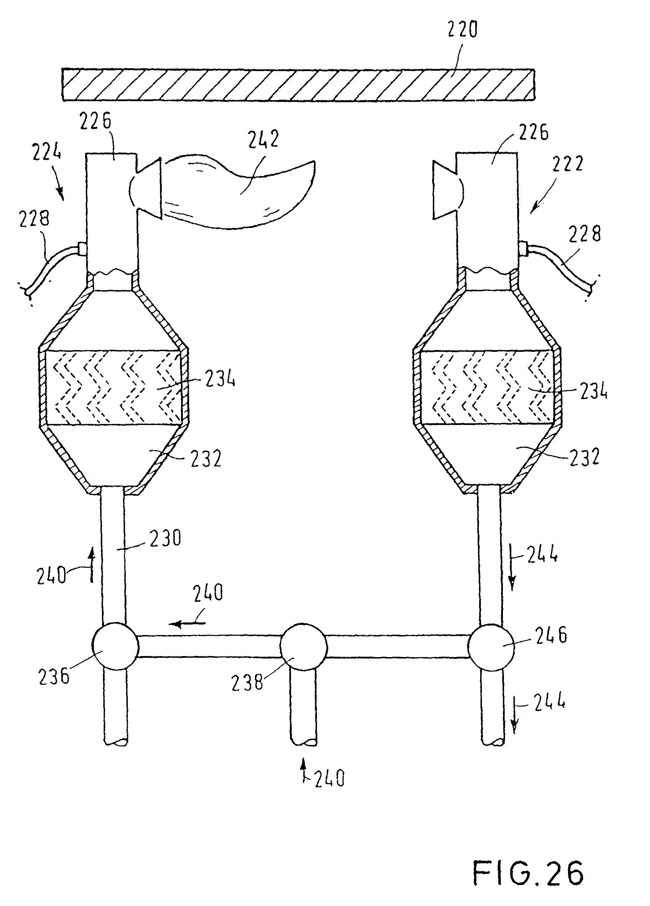

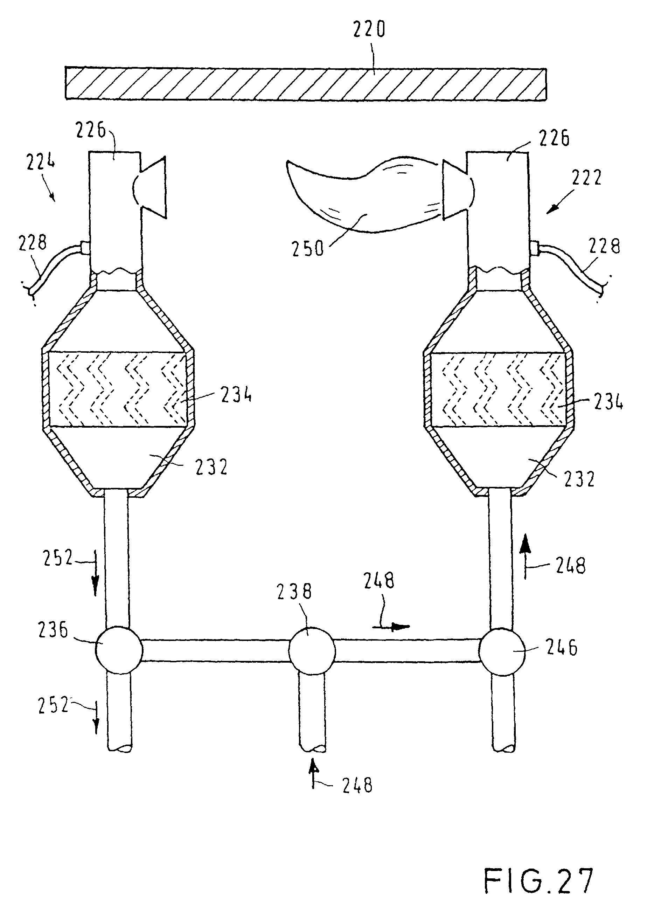

In den Fign. 26 und 27 ist der erste bzw. zweite Zyklus eines Strahlungsbrenners dargestellt. Strahlungsbrenner dienen zum Erwärmen von Bandmaterial 220, beispielsweise Stahlbrammen. Die beiden Strahlungsbrenner 222,224 sind identisch aufgebaut und weisen jeweils einen Brennerkopf 226 auf, dem über eine Zuführleitung 228 Brennstoff zugeführt wird. Der Brennstoff wird in dem Brennerkopf 226 vergast und gezündet.
Im ersten Zyklus (Fig. 26) wird die Frischluft über eine Leitung 230 einer Vorkammer 232 des Strahlungsbrenners 224 zugeführt. In der Vorkammer 232 ist als Wärmetauscher 234 ein poröser Körper gemäß der Erfindung angeordnet. Die Frischluft strömt durch den Wärmetauscher 234 in den Brennerkopf 226. Die Frischluftzufuhr zu der Vorkammer 232 erfolgt über ein Gebläse und entsprechend gesteuerte Ventile 236,238 in Richtung der Pfeile 240.

Durch die von der Flamme 242 abgegebene Strahlungswärme wird das Bandmaterial 220 erwärmt. Die bei der Verbrennung auftretenden Abgase werden in den Brennerkopf 226 des Strahlungsbrenners 222 eingesaugt und durch den Wärmetauscher 234 des Strahlungsbrenners 222 geleitet. Hierbei wird der Wärmetauscher 234 von den Abgasen erwärmt. Die Abgase werden in Richtung der Pfeile 244 abgeführt, wobei ein Ventil 246 entsprechend gesteuert ist, so dass keine Vermischung der dem Strahlungsbrenner 224 zugeführten Frischluft mit der durch den Strahlungsbrenner 222 abgeführten Abgase stattfindet.

Im zweiten Zyklus (Fig. 27) ist die Funktion der beiden Strahlungsbrenner 222,224 vertauscht. Dem Strahlungsbrenner 222 wird in Richtung der Pfeile 248 Frischluft zugeführt, wobei die Ventile 238 und 246 entsprechend gesteuert sind.

Die Frischluft gelangt in den Vorraum 232 des Strahlungsbrenners 222 und wird durch den Wärmetauscher 234 geführt, wobei sie sich erwärmt. In dem Brennerkopf 226 des Strahlungsbrenners 222 dient die erwärmte Luft zum Vergasen des durch die Zuführleitung 228 zugeführten Brennstoffs. Das Gas-Luft-Gemisch wird anschließend gezündet, so dass durch die Strahlungswärme der Flamme 250 wiederum das Bandmaterial 220 erwärmt wird. Durch das Vorwärmen der Frischluft kann der Wirkungsgrad des Strahlungsbrenners erheblich verbessert werden.

In dem zweiten Zyklus (Fig. 27) werden die Abgase durch den Strahlungsbrenner 224 abgeführt, wobei der Wärmetauscher 234 des Strahlungsbrenners 224 erwärmt wird. Anschließend werden die Abgase in Richtung der Pfeile 252 abgeführt, wobei das Ventil 236 entsprechend gesteuert ist. Nach Beendigung des zweiten Zyklus werden die Strahlungsbrenner 222,224 wieder im ersten Zyklus betrieben, so dass ein Intervallbetrieb stattfindet, in dem die dem entsprechenden Strahlungsbrenner zugeführte Frischluft vorgewärmt wird.

## Patentansprüche

1. Poröser Körper aus temperaturbeständigem Material, insbesondere aus Keramik, zum Filtern und/oder Mischen von Fluiden, mit
- einem keramischen Schaumkörper, mit einer Eintrittsfläche (4,102) und einer Austrittsfläche (5,103), wobei der keramische Schaumkörper von dem Fluid von der Eintrittsfläche (4,102) in Richtung auf die Austrittsfläche (5,103) durchströmbar ist,
- mehreren in spitzem Winkel zur Durchströmungsrichtung (D) angeordneten ersten Kanälen (2,132) und
- mehreren zweiten Kanälen (3,138), die in einem spitzen Winkel zur Durchströmungsrichtung (D) und in einem Winkel zu den ersten Kanälen (2,132) angeordnet sind,
- wobei sich die ersten und zweiten Kanäle (2,132;3,138) zumindest teilweise durchdringen.

2. Poröser Körper nach Anspruch 1, **dadurch gekennzeichnet, daß** der Winkel der ersten und/oder zweiten Kanäle (2,132;3,138) zur Durchströmungsrichtung (D)' entlang der Erstreckung der Kanäle (2,132;3,138) variiert.

3. Poröser Körper nach Anspruch 1 oder 2, **dadurch gekennzeichnet, daß** die ersten und/oder zweiten Kanäle (2,3) wellenförmig sind.

4. Poröser Körper nach einem der Ansprüche 1 bis 3, **dadurch gekennzeichnet, daß** der poröse Körper (101) in Durchströmungsrichtung (D) mehrere Abschnitte (104,105) aufweist, in denen die ersten und/oder zweiten Kanäle (132,138) geradlinig verlaufen.

5. Poröser Körper nach Anspruch 4, **dadurch gekennzeichnet, daß** die ersten und/oder zweiten Kanäle (132,138) benachbarter Abschnitte (104,105) jeweils einen spitzen Winkel zueinander aufweisen.

6. Poröser Körper nach Anspruch 4 oder 5, **dadurch gekennzeichnet, daß** sich die Abschnitte (104,105) in Durchströmungsrichtung (D) periodisch wiederholen.

7. Poröser Körper nach einem der Ansprüche 4 bis 6, **dadurch gekennzeichnet, daß** die ersten und/oder zweiten Kanäle (132,138) in benachbarten Abschnitten (104,105) spiegelbildlich angeordnet sind.

8. Poröser Körper nach einem der Ansprüche 1 bis 7, **dadurch gekennzeichnet, daß** die ersten und/oder zweiten Kanäle (132,138) jeweils in mindestens einer Reihe (134,136) angeordnet sind und die Kanalreihen (134,136) alternierend nebeneinander und parallel zueinander angeordnet sind.

9. Poröser Körper nach einem der Ansprüche 1 bis 8, **dadurch gekennzeichnet, daß** der poröse Körper (1,101) zylindrisch ist und sich die ersten und/oder zweiten Kanäle (2,132;3,138) von der Eintrittsfläche (4,102) bis zur Austrittsfläche (5,103) des porösen Körpers (1,101) erstrecken.

10. Poröser Körper nach einem der Ansprüche 1 bis 9, **dadurch gekennzeichnet, daß** der poröse Körper (1,101) aus hochtemperaturbeständigem keramischen Material, insbesondere aus Zirconiumoxid oder Siliziumkarbid besteht.

11. Verfahren zum Herstellen eines von Fluid durchströmbaren porösen Körpers aus temperaturbeständigem Material, insbesondere aus Keramik mit diesen durchziehenden Kanälen, bei dem
- mindestens ein Kunststoffschaumkörper mit einer Oberseite und einer Unterseite aus einem flexiblen Kunststoffschaummaterial erzeugt wird,
- der Schaumkörper um einen Scherwinkel in eine erste Richtung geschert wird, indem er einer ersten Scherkraft ausgesetzt wird,
- in den so gescherten Kunststoffschaumkörper von der Oberseite und/oder der Unterseite erste Kanäle eingebracht werden, und zwar in einem vom ersten Scherwinkel verschiedenen Winkel zur Normalen der Oberseite und/oder der Unterseite,
- die erste Scherkraft wieder aufgehoben wird, wobei sich der Kunststoffschaumkörper wieder zurückstellt,
- die Oberfläche des Kunststoffschaumkörpers mit einem aushärtbaren temperaturbeständigen Benetzungsmaterial benetzt wird und
- das Kunststoffschaummaterial des mit Benetzungsmaterial benetzten Kunststoffschaumkörpers entfernt wird.

12. Verfahren nach Anspruch 11, **dadurch gekennzeichnet, daß** der Kunststoffschaumkörper nach Aufhebung der ersten Scherkraft um einen Scherwinkel in einer zur ersten Richtung entgegengesetzten zweiten Richtung geschert wird, indem er einer in zur ersten Scherkraft entgegengesetzt wirkenden zweiten Scherkraft ausgesetzt wird und daß in den so gescherten Kunststoffschaumkörper von der Oberseite und/oder der Unterseite zweite Kanäle eingebracht werden, und zwar in einem vom zweiten Scherwinkel verschiedenen Winkel zur Normalen der Oberseite und/oder der Unterseite und die zweite Scherkraft wieder aufgehoben wird, wobei sich der Kunststoffschaumkörper wieder zurückstellt.

13. Verfahren nach Anspruch 12, **dadurch gekennzeichnet, daß** die Scherwinkel, um die der Kunststoffschaumkörper geschert wird, gleich sind.

14. Verfahren nach einem der Ansprüche 11 bis 13, **dadurch gekennzeichnet, daß** der Kunststoffschaumkörper als geometrisch beliebiges Tafelmaterial mit zueinander parallelen Ober- und Unterseiten erzeugt wird.

15. Verfahren nach einem der Ansprüche 11 bis 14, **dadurch gekennzeichnet, daß** die Kanäle unter einem Winkel von im wesentlichen 90° zur Ober- und/oder Unterseite in den jeweils gescherten Kunststoffschaumkörper eingebracht werden.

16. Verfahren nach einem der Ansprüche 11 bis 15, **dadurch gekennzeichnet, daß** die Kanäle sich von der Oberseite bis zur Unterseite des Kunststoffschaumkörpers erstrecken.

17. Verfahren nach einem der Ansprüche 11 bis 16, **dadurch gekennzeichnet, daß** die Kanäle durch Stanzen, Kernbohren und/oder Heißschneiden in den Kunststoffschaumkörper eingebracht werden.

18. Verfahren nach einem der Ansprüche 11 bis 17, **dadurch gekennzeichnet, daß** der Kunststoffschaumkörper offenzellig ist.

19. Verfahren nach Anspruch 18, **dadurch gekennzeichnet, daß** der offenzellige Kunststoffschaumkörper durch Öffnen der Zellen eines aus geschlossenzelligem Kunststoffschaummaterial bestehenden Kunststoffschaumkörpers hergestellt wird, indem dieser Kunststoffschaumkörper einer Druckwelle ausgesetzt wird, durch die die Zellen geöffnet werden.

20. Verfahren nach Anspruch 11, **dadurch gekennzeichnet, daß** das Kunststoffschaummaterial durch Erhitzen des mit Benetzungsmaterial benetzten Kunststoffschaumkörpers entfernt wird oder in anderer Weise verflüchtigt wird.

21. Verfahren nach Anspruch 11, **dadurch gekennzeichnet, daß** mehrere Kunststoffschaumkörper aneinanderliegend angeordnet werden, wobei die Kanäle benachbarter Kunststoffschaumkörper insbesondere gegensinnig gerichtet sind und daß diese Anordnung von Kunststoffschaumkörpern mit dem Benetzungsmaterial benetzt wird.

22. Verfahren nach einem der Ansprüche 11 bis 21, **dadurch gekennzeichnet, daß** das Kunststoffschaummaterial Polyurethan aufweist.

23. Verfahren nach einem der Ansprüche 11 bis 22, **dadurch gekennzeichnet, daß** das Benetzungsmaterial keramischer Schlicker ist und daß die Entfernung des Kunststoffschaummaterials durch Erhitzen beim Brennen des keramischen Schlickers erfolgt.

24. Verfahren nach einem der Ansprüche 11 bis 23, **dadurch gekennzeichnet, daß** der Kunststoffschaumkörper zum Benetzen durch das Benetzungsmaterial mit diesem getränkt wird.

25. Verfahren nach einem der Ansprüche 11 bis 24, **dadurch gekennzeichnet, daß** der aus Benetzungsmaterial bestehende Körper mit einem katalytisch wirkenden Beschichtungsmaterial beschichtet wird.

26. Verfahren nach einem der Ansprüche 11 bis 25, **dadurch gekennzeichnet, daß** der mit Benetzungsmaterial benetzte Kunststoffschaumkörper in einer Form aushärtet.

## Claims

1. A porous member of temperature-resistant material, in particular of ceramics, for filtering and/or mixing fluids, comprising
- a ceramic foamed member having an inlet surface (4, 102) and an outlet surface (5, 103), the member being adapted to be flown through by the fluid from the inlet surface (4, 102) towards the outlet surface (5, 103),
- a plurality of first channels (2, 132) arranged under an acute angle to the flow direction (D), and
- a plurality of second channels (3, 138) arranged under an acute angle to the flow direction (D) and under an angle to the first channels (2, 132),
- the first and second channels (2, 132; 3, 138) penetrating each other at least partly.

2. The porous member of claim 1, wherein the angle of the first and/or second channels (2, 132; 3, 138) to the flow direction (D) varies along the extension of the channels (2, 132; 3, 138).

3. The porous member of claim 1 or 2, wherein the first and/or second channels (2, 3) are wave-shaped.

4. The porous member of one of claims 1 to 3, wherein, in the flow direction (D), the porous member (101) has a plurality of sections (104, 105) in which the first and/or second channels (132, 138) are straight.

5. The porous member of 4, wherein the first and/or second channels (132, 138) of adjacent sections (104, 105) each extend under an acute angle to each other.

6. The porous member of claim 4 or 5, wherein the sections (104, 105) periodically recur in the flow direction (D).

7. The porous member of one of claims 4 to 6, wherein the first and/or second channels (132, 138) are arranged mirror-inverted in adjacent sections (104, 105).

8. The porous member of one of claims 1 to 7, wherein the first and/or second channels (132, 138), respectively, are each arranged in at least one row (134, 136), the channel rows (134, 136) being alternately arranged side by side and in parallel.

9. The porous member of one of claims 1 to 8, wherein the porous member (1, 101) is cylindrical and the first and/or second channels (2, 132; 3, 138) extend from the inlet surface (4, 102) to the outlet surface (5, 103) of the porous member (1, 101).

10. The porous member of one of claims 1 to 9, wherein the porous member (1, 101) is made of high temperature-resistant material, in particular zirconia oxide or silicon carbide.

11. A method for manufacturing a porous member of temperature- resistant material, in particular ceramics, with channels extending through the member, which is adapted to be flown through by a fluid, wherein
- at least one foamed plastic material member with a top and a bottom surface is formed from a flexible foamed plastic material,
- the foamed material member is sheared in a first direction about a shear angle by being subjected to a first shearing force,
- from the top and/or the bottom surface, first channels are formed in the foamed plastic material member thus sheared, the channels being formed under an angle to the normal of the top and/or bottom surface, this angle being different from the first shear angle,
- the first shearing force is relaxed and the foamed plastic material member restores itself,
- the surface of the foamed plastic material member is wetted with a curable temperature-resistant wetting material, and
- the plastic material of the foamed plastic material member wetted with the wetting material is removed.

12. The method of claim 11, wherein, after the first shearing force has been relaxed, the foamed plastic material member is sheared about a shear angle in a second direction opposite the first direction, by subjecting it to a second shearing force acting opposite to the first shearing force, and wherein, from the top and/or the bottom surface, second channels are formed in the foamed plastic material member thus sheared, the channels being formed under an angle to the normal of the top and/or bottom surface, this angle being different from the second shear angle, and wherein the second shearing force is relaxed and the foamed plastic material member restores itself.

13. The method of claim 12, wherein the shear angles about which the foamed plastic material member is sheared are the same.

14. The method of one of claims 11 to 13, wherein the foamed plastic material member is produced as a plate material of optional geometry, the top and bottom surfaces being parallel.

15. The method of one of claims 11 to 14, wherein the channels are formed in the respective sheared foamed plastic material member under an angle of substantially 90° to the top and/or bottom surface.

16. The method of one of claims 11 to 15, wherein the channels extend from the top to the bottom surface of the foamed plastic material member.

17. The method of one of claims 11 to 16, wherein the channels are formed in the foamed plastic material member by punching, core drilling and/or hot cutting.

18. The method of one of claims 11 to 17, wherein the foamed plastic material member is open-celled.

19. The method of claim 18, wherein the open-celled foamed plastic material member is made by opening the cells of a foamed plastic material member made of closed-cell foamed plastic material, by subjecting the foamed plastic material member to a shock wave that opens the cells.

20. The method of claim 11, wherein the foamed plastic material is removed by heating the foamed plastic material member wetted with the wetting material, or by evaporating the same in another way.

21. The method of claim 11, wherein a plurality of foamed plastic material members are arranged abutting each other, the channels of adjacent foamed plastic material members being directed, in particular, oppositely and wherein this arrangement of foamed plastic material members is wetted with the wetting material.

22. The method of claims 11 to 21, wherein the foamed plastic material comprises polyurethane.

23. The method of claims 11 to 22, wherein the wetting material is ceramic slip, and wherein the removal of the foamed plastic material member is effected by heating while burning the ceramic slip.

24. The method of one of claims 11 to 23, wherein the foamed plastic material member is drenched with the wetting material for being wetted therewith.

25. The method of one of claims 11 to 24, wherein the member of wetting material is coated with a catalytically active coating material.

26. The method of one of claims 11 to 25, wherein the foamed plastic material member wetted with wetting material is cured in a mold.

## Revendications

1. Corps poreux perméable à base de matériau résistant à la chaleur, en particulier en céramique, pour le filtrage et/ou le mélange de fluides, avec
- un corps cellulaire céramique, avec une surface d'entrée (4, 102) et une surface de sortie (5, 103), le corps cellulaire céramique pouvant être traversé par le fluide de la surface d'entrée (4, 102) en direction de la surface de sortie (5, 103),
- plusieurs premiers canaux (2, 132) disposés en formant un angle aigu par rapport au sens d'écoulement (D),
- plusieurs seconds canaux (3, 138), qui sont disposés en formant un angle aigu par rapport au sens d'écoulement (D) et un angle par rapport aux premiers canaux (2, 132),
- les premiers et seconds canaux (2, 132 ; 3, 138) se pénétrant au moins partiellement.

2. Corps poreux selon la revendication 1, **caractérisé en ce que** l'angle des premiers et/ou seconds canaux (2, 132 ; 3, 138) par rapport au sens d'écoulement (D)' varie le long de l'étirement des canaux (2, 132 ; 3, 138).

3. Corps poreux selon la revendication 1 ou 2, **caractérisé en ce que** les premiers et/ou seconds canaux (2, 3) ont une forme ondulée.

4. Corps poreux selon l'une quelconque des revendications 1 à 3, **caractérisé en ce que** le corps poreux (101) présente plusieurs parties (104, 105) dans le sens d'écoulement (D), dans lesquelles les premiers et seconds canaux (132, 138) sont agencés de façon rectiligne.

5. Corps poreux selon la revendication 4, **caractérisé en ce que** les premiers et/ou seconds canaux (132, 138) de parties (104, 105) voisines forment un angle aigu les uns par rapport aux autres.

6. Corps poreux selon la revendication 4 ou 5, **caractérisé en ce que** les parties (104, 105) se répètent de façon périodique dans le sens d'écoulement (D).

7. Corps poreux selon l'une quelconque des revendications 4 à 6, **caractérisé en ce que** les premiers et/ou seconds canaux (132, 138) sont disposés de façon symétrique dans des parties (104, 105) voisines.

8. Corps poreux selon l'une quelconque des revendications 1 à 7, **caractérisé en ce que** les premiers et/ou seconds canaux (132, 138) sont disposés respectivement dans au moins une rangée (134, 136) et les rangées de canaux (134, 136) sont disposées de façon alternative les unes à côté des autres et de façon parallèle entre elles.

9. Corps poreux selon l'une quelconque des revendications 1 à 8, **caractérisé en ce que** le corps poreux (1, 101) est cylindrique et les premiers et/ou seconds canaux (2, 132 ; 3, 138) s'étendent de la surface d'entrée (4, 102) jusqu'à la surface de sortie (5, 103) du corps poreux (1, 101).

10. Corps poreux selon l'une quelconque des revendications 1 à 9, **caractérisé en ce que** le corps poreux (1, 101) est à base d'un matériau céramique à haute stabilité thermique, en particulier à base d'oxyde de zirconium ou de carbure de silicium.

11. Procédé pour fabriquer un corps poreux traversé par du fluide à base de matériau résistant à la chaleur, en particulier en céramique avec des canaux parcourant ce corps, avec lequel
- au moins un corps cellulaire en plastique est généré avec une face supérieure et une face inférieure à base d'un matériau cellulaire flexible en plastique,
- le corps cellulaire est cisaillé d'un angle de cisaillement dans une première direction, du fait qu'il est exposé à une première force de cisaillement,
- des premiers canaux sont introduits dans le corps cellulaire en plastique ainsi cisaillé par la face supérieure et/ou la face inférieure, et ce dans un angle, différent du premier angle de cisaillement, par rapport à la verticale de la face supérieure et/ou de la face inférieure,
- la première force de cisaillement est à nouveau supprimée, le corps cellulaire en plastique revenant de nouveau à la position initiale,
- la surface du corps cellulaire en plastique étant mouillée avec un matériau de mouillage résistant à la chaleur et durcissable et
- le matériau cellulaire en plastique du corps cellulaire en plastique mouillé avec du matériau de mouillage étant enlevé.

12. Procédé selon la revendication 11, **caractérisé en ce que** le corps cellulaire en plastique est cisaillé après la suppression de la première force de cisaillement d'un angle de cisaillement dans une seconde direction opposée à la première direction, du fait qu'il est exposé à une seconde force de cisaillement agissant de façon opposée à la première force de cisaillement et **en ce que** des seconds canaux sont introduits dans le corps cellulaire en plastique ainsi cisaillé par la face supérieure et/ou la face inférieure, et ce en formant un angle, différent du second angle de cisaillement, par rapport à la verticale de la face supérieure et/ou la face inférieure et la seconde force de cisaillement est à nouveau supprimée, le corps cellulaire en plastique revenant de nouveau à sa position de départ.

13. Procédé selon la revendication 12, **caractérisé en ce que** les angles de cisaillement, desquels le corps cellulaire en plastique est cisaillé, sont identiques.

14. Procédé selon l'une quelconque des revendications 11 à 13, **caractérisé en ce que** le corps cellulaire en plastique est généré comme un matériau de panneau de forme quelconque au plan géométrique avec des faces supérieures et inférieures parallèles entre elles.

15. Procédé selon l'une quelconque des revendications 11 à 14, **caractérisé en ce que** les canaux sont introduits dans le corps cellulaire en plastique respectivement cisaillé sous un angle de sensiblement 90° par rapport à la face supérieure et/ou la face inférieure.

16. Procédé selon l'une quelconque des revendications 11 à 15, **caractérisé en ce que** les canaux s'étendent de la face supérieure à la face inférieure du corps cellulaire en plastique.

17. Procédé selon l'une quelconque des revendications 11 à 16, **caractérisé en ce que** les canaux sont introduits dans le corps cellulaire en plastique par estampage, perçage du noyau et/ou par découpage à chaud.

18. Procédé selon l'une quelconque des revendications 11 à 17, **caractérisé en ce que** le corps cellulaire en plastique est à alvéoles ouvertes.

19. Procédé selon la revendication 18, **caractérisé en ce que** le corps cellulaire en plastique à alvéoles ouvertes est fabriqué par l'ouverture des cellules d'un corps cellulaire en plastique à base de matériau cellulaire en plastique à alvéoles fermées, en exposant ce corps cellulaire en plastique à une onde de pression, par laquelle les cellules sont ouvertes.

20. Procédé selon la revendication 11, **caractérisé en ce que** le matériau cellulaire en plastique est enlevé par réchauffement du corps cellulaire en mousse mouillé avec du matériau de mouillage ou est volatilisé d'une autre façon.

21. Procédé selon la revendication 11, **caractérisé en ce que** plusieurs corps cellulaires en plastique sont disposés les uns à côté des autres, les canaux de corps cellulaires voisins en plastique étant orientés dans le sens contraire et **en ce que** cette disposition de corps cellulaires en plastique sont mouillés avec le matériau de mouillage.

22. Procédé selon l'une quelconque des revendications 11 à 21, **caractérisé en ce que** le matériau cellulaire en plastique présente du polyuréthanne.

23. Procédé selon l'une quelconque des revendications 11 à 22, **caractérisé en ce que** le matériau de mouillage est de la barbotine céramique et **en ce que** l'enlèvement du matériau cellulaire en plastique s'effectue par l'enlèvement du matériau cellulaire en plastique lors du réchauffement lors de la combustion de la barbotine céramique.

24. Procédé selon l'une quelconque des revendications 11 à 23, **caractérisé en ce que** le corps cellulaire en plastique est imbibé pour le mouillage par le matériau de mouillage avec celui-ci.

25. Procédé selon l'une quelconque des revendications 11 à 24, **caractérisé en ce que** le corps à base de matériau de mouillage est enduit d'un matériau de revêtement agissant de façon catalytique.

26. Procédé selon l'une quelconque des revendications 11 à 25, **caractérisé en ce que** le corps cellulaire en mousse mouillé avec du matériau de mouillage durcit dans un moule.
